# EUROPEAN PATENT SPECIFICATION

(11) **EP 2 680 656 B1**
(45) Date of publication and mention of the grant of the patent: **11.05.2016**
(21) Application number: 12174473.4
(22) Date of filing: 29.06.2012
(51) Int. Cl.: H04W 74/00, H04W 48/02

(54) **Enhanced barring for wireless communication**
Verbesserte Sperrung für drahtlose Kommunikation
Barrière améliorée pour communication sans fil

(43) Date of publication of application: 01.01.2014
(73) Proprietor: FUJITSU LIMITED, Kawasaki-shi, Kanagawa 211-8588 (JP)
(72) Inventor: Tesanovic, Milos, Hayes, Middlesex UB4 8FE (GB); Moulsley, Timothy, Caterham, Surrey CXR3 5EE (GB); Bucknell, Paul, Brighton, Sussex BN2 1SP (GB); Chebbo, Hind, Uxbridge, Mid Glamorgan UB8 3SY (GB)
(74) Representative: Stebbing, Timothy Charles

(56) References cited:
- EP-A2- 2 373 110
- US-A1- 2011 274 040
- US-A1- 2012 039 171
- "3rd Generation Partnership Project; Technical Specification Group Radio Access Network; Physical layer procedures (FDD) (Release 11)", 3GPP STANDARD; 3GPP TS 25.214, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.1.0, 7 March 2012 (2012-03-07), pages 1-106, XP050579994, [retrieved on 2012-03-07]
- "3rd Generation Partnership Project; Technical Specification Group Radio Access Network; Medium Access Control (MAC) protocol specification (Release 11)", 3GPP STANDARD; 3GPP TS 25.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V11.1.0, 27 June 2012 (2012-06-27), pages 1-198, XP050581138, [retrieved on 2012-06-27]
- 3GPP: "3rd Generation Partnership Project; Technical Specification Group Services and System Aspects; Service accessibility (Release 11), 3GPP TS 22.011", 3GPP DRAFT; Z_22011-B20, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 20 December 2011 (2011-12-20), XP050574195, [retrieved on 2011-12-20]

## Description

### Field of the Invention

The present invention relates to a transmission method in a wireless communication system comprising a base station and terminals for transmitting transmission data to the base station. The present invention further relates to a terminal, to a base station and a computer program for use in said method.

Particularly, but not exclusively, the present invention relates to uplink communication procedures in accordance with the LTE (Long Term Evolution) and LTE-Advanced radio technology standards as, for example, described in the 3GPP TS36 series specifications, Releases 8, 9, 10 and subsequent of the 3GPP specification series. However, the present invention is also applicable to UMTS, WiMAX and other communication systems in which radio resource allocation requests are communicated from a terminal (also referred to as "subscriber station", "user equipment" or UE, "mobile terminal" etc.) to a base station.

### Background of the Invention

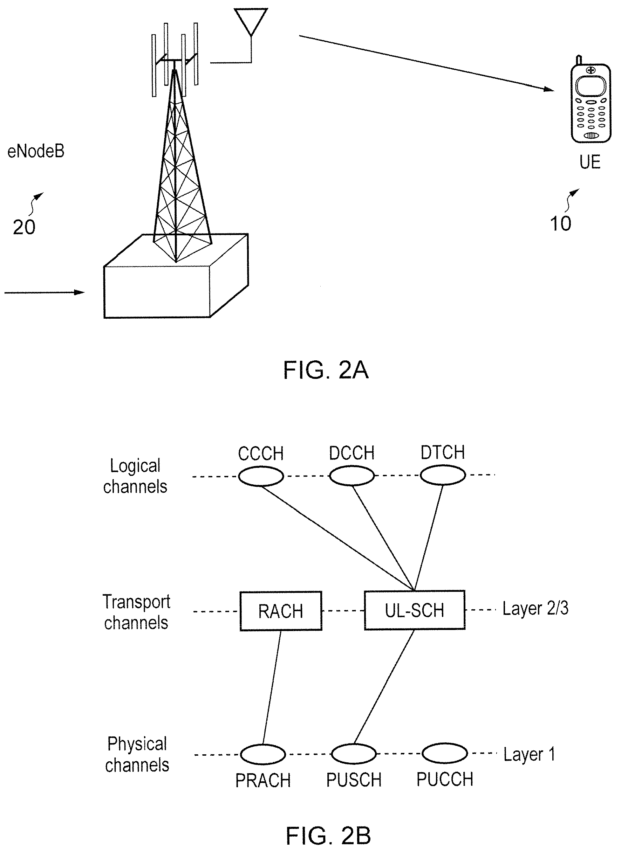

Wireless communication systems are widely known in which base stations (BSs) form "cells" and communicate with terminals within range of the BSs. In LTE for example, the base stations are generally called eNodeBs or eNBs and the terminals are called user equipments or UEs. At its simplest, the arrangement is as shown in Fig. 2A with a UE 10 in communication with a single eNodeB 20. In practice, as will be understood by those skilled in the art, the eNodeB 20 is able to maintain communications with many UEs 10 simultaneously. The eNB 20 provides, along with other eNBs forming adjacent or overlapping cells as well as higher-level nodes, a Radio Access Network (RAN). The eNBs are, in turn, connected to a Core Network (CN). The RAN will also be referred to here as a "wireless communication system", and the terms "network" and "system" are used interchangeably.

The direction of communication from the base station to the UE, indicated by an arrow in Fig. 2A, is referred to as the downlink (DL), and the reverse direction from the UE to the base station is the uplink (UL). Two well-known transmission modes for a wireless communication system are TDD (Time Division Duplex), in which downlink and uplink transmissions occur on the same carrier frequency and are separated in time, and FDD (Frequency Division Duplex) in which transmission occurs simultaneously on DL and UL using different carrier frequencies.

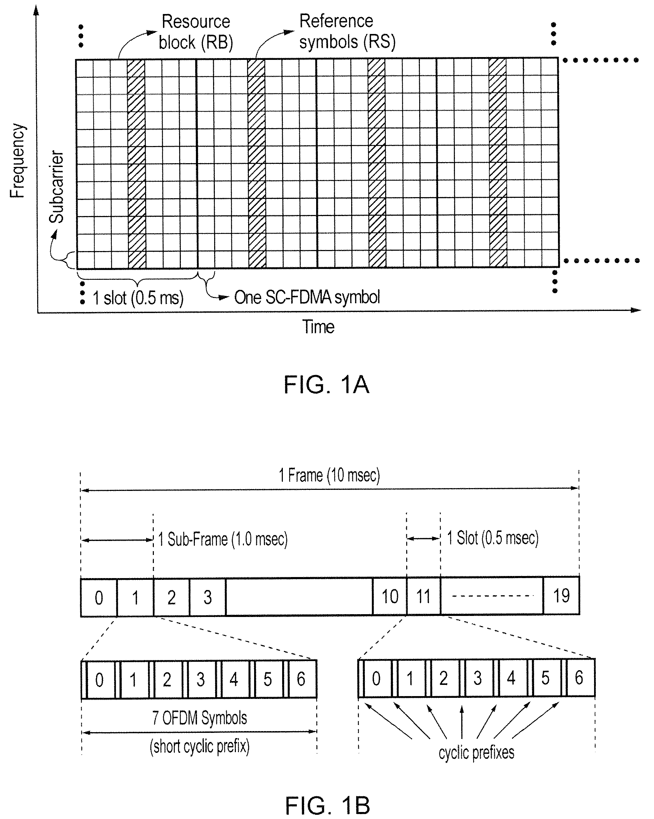

Resources in the system have both a frequency dimension, divided in units of subcarriers, and a time dimension having units of a symbol time or "slot" (where a "slot" has typically a duration of seven symbol times), as indicated in Figure 1A. Each element in the resource grid is called a resource element (RE) and each resource element corresponds to one symbol. An amount of resource consisting of a set number of subcarriers and OFDM symbols is referred to as a resource block (RB) in LTE, as indicated by the bold outline in Figure 1A.

The resources in the time domain are further organised in units of frames, each having a plurality of "subframes". In one frame structure for LTE, the 10 ms frame is divided into 20 equally sized slots of 0.5 ms as illustrated in Figure 1B. A sub-frame consists of two consecutive slots, so one radio frame contains 10 sub-frames. An FDD frame consists of 10 uplink subframes and 10 downlink subframes occurring simultaneously. In TDD, various allocations of subframes to downlink and uplink are possible, depending on the load conditions. Subframes may consequently be referred to as uplink subframes or downlink subframes.

The UEs are allocated, by a scheduling function at the eNodeB, a specific number of subcarriers for a predetermined amount of time. Such allocations typically apply to each subframe, and are employed to transmit data in the form of packets constructed from protocol data units (PDUs). Resources are allocated to UEs both for downlink and uplink transmission (i.e. for both downlink subframes and uplink subframes).

In LTE, several channels for data and control signalling are defined at various levels of abstraction within the system.

Figure 2B shows some of the uplink channels defined in LTE at each of a logical level, transport layer level and physical layer level, and the mappings between them. User data and also some signalling data is carried on a Physical Uplink Shared Channel (PUSCH). By means of frequency hopping on PUSCH, frequency diversity effects can be exploited and interference averaged out. The control channels include a Physical Uplink Control Channel, PUCCH, used to carry signalling from UEs including channel state information (CSI), as represented for example by channel quality indication (CQI) reports, and scheduling requests (SR). Of particular interest for present purposes, there is also a Physical Random Access Control Channel, PRACH with at the transport layer level, a corresponding Random Access Channel, RACH.

Meanwhile, on the downlink (not illustrated), user data and higher layer signalling (e.g. for radio resource control (RRC)) is carried on the Physical Downlink Shared Channel (PDSCH). Other control channel signalling (e.g. for radio resource allocation) is carried by the Physical Downlink Control Channel, PDCCH. Downlink signalling includes System Information (SI) which consists of cell- and network-specific parameters needed by UEs to connect to the network. SI is divided into SI blocks (SIBs) each containing a set of related parameters.

A RRC connection establishment procedure is conducted between the network and a UE which wishes to access the network. In particular, the Physical Random Access Channel PRACH is used to carry the Random Access Channel (RACH) for accessing the network if the UE does not have any allocated uplink transmission resource. If a scheduling request (SR) is triggered at the UE, for example by arrival of data for transmission on PUSCH, when no PUSCH resources have been allocated to the UE, the SR is transmitted on a dedicated resource for this purpose. If no such resources have been allocated to the UE, the RACH procedure is initiated. The transmission of SR is effectively a request for uplink radio resource on the PUSCH for data transmission.

Thus, RACH is provided to enable UEs to transmit signals in the uplink without having any dedicated resources available, such that more than one terminal can transmit in the same PRACH resources simultaneously. The term "Random Access" (RA) is used because in contention-based access, the identity of the UE (or UEs) using the resources at any given time is not known in advance by the network. Preambles (which when transmitted, produce a signal with a signatures which can be identified by the eNodeB) are employed by the UEs to allow the eNodeB to distinguish between different sources of transmission.

RACH can be used by the UEs in either of contention-based and contention-free modes. In contention-based RA, UEs select any preamble at random, at the risk of "collision" at the eNodeB if two or more UEs accidentally select the same preamble. Contention-free RA avoids collision by the eNodeB informing each UE which specific preamble may be used.

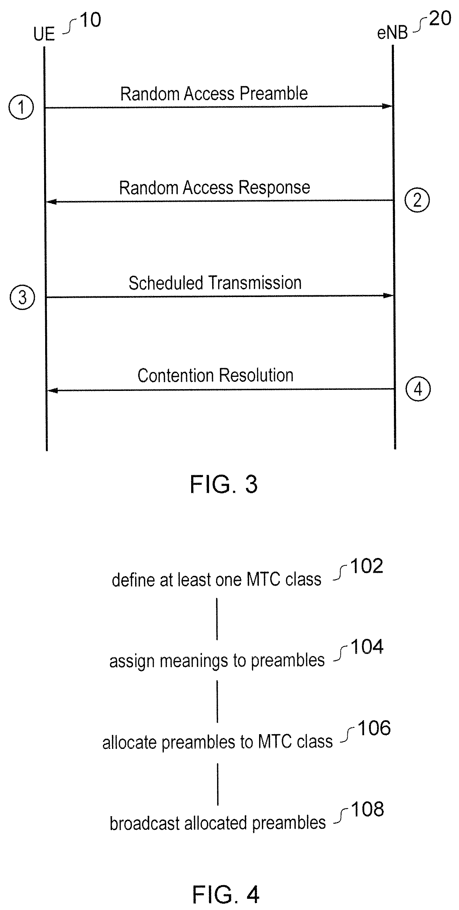

Referring to Figure 3, the Physical Random Access Channel PRACH typically operates as follows (for contention based access):-
(i) The UE10 receives the downlink broadcast channel for the cell of interest (serving cell).
(ii) The network, represented in Figure 3 by eNodeB 20, indicates cell specific information including the following:
   - resources available for PRACH
   - preambles available (up to 64)
   - preambles corresponding to small and large message sizes.
(iii) The UE selects a PRACH preamble according to those available for contention based access and the intended message size.
(iv) The UE 10 transmits the PRACH preamble (also called "Message 1", indicated by (1) in the Figure) on the uplink of the serving cell. Conventionally, the UE may transmit the PRACH preamble at any time, although there is a risk of collision with preambles sent from other UEs as noted above. The network (more particularly the eNodeB of the serving cell) receives Message 1 and estimates the transmission timing of the UE.
(v) The UE 10 monitors a specified downlink channel for a response from the network (in other words from the eNodeB). In response to the UE's transmission of Message 1, the UE 10 receives a Random Access Response or RAR ("Message 2" indicated by (2) in Figure 3) from the network. This contains an UL grant for transmission on PUSCH and a Timing Advance (TA) command for the UE to adjust its transmission timing.
(vi) In response to receiving Message 2 from the network, the UE 10 transmits on PUSCH ("Message 3", shown at (3) in the Figure) using the UL grant and TA information contained in Message 2.
(vii) As indicated at (4), a contention resolution message may be sent from the network (in this case from eNodeB 20) in the event that the eNodeB 20 received the same preamble simultaneously (that is, in the same subframe) from more than one UE, and more than one of these UEs transmitted Message 3.

If the UE does not receive any response from the eNodeB, the UE selects a new preamble and sends a new transmission in a RACH subframe after a random back-off time.

The RAR contains a Cell Radio Network Temporary Identifier (C-RNTI) which identifies the UE. In the contention-based procedure, the UE transmits this C-RNTI back to the eNodeB in Message 3 and, if more than one UE does so there will be a collision at the eNodeB which may then initiate the contention resolution procedure.

The above discussion has referred to UEs, which are typically visualised as mobile terminals and the like, operated by human users. However, a wireless communication system based on LTE or UMTS may also be used for so-called Machine Type Communication (MTC), where MTC is a form of data communication which involves one or more entities that do not necessarily need human interaction. Entities involved in MTC -below, MTC devices - are also to be considered as a kind of UE except where the context demands otherwise.

MTC is different from current communication models as it potentially involves very large number of communicating entities (MTC devices) with little traffic per device. Examples of such applications include: fleet management, smart metering, product tracking, home automation, e-health, etc. The 3GPP Technical Report TR 23.888 "System Improvements for Machine-Type Communications" summarises an agreed architectural baseline for MTC services provided by a 3GPP wireless communication system.

MTC has great potential for being carried on wireless communication systems (also referred to here as mobile networks), owing to their ubiquitous coverage. However, for mobile networks to be competitive for mass machine-type applications, it is important to optimise their support for MTC. Current mobile networks are optimally designed for Human-to-Human communications, but are less optimal for machine-to-machine, machine-to-human, or human-to-machine applications.

The advent of MTC between e.g. smart meters in homes and an LTE network creates a large number of deployed devices which must be low cost, low power, are generally deployed statically and have low-rate, possibly periodic data transmissions with potentially long gaps.

It is therefore desirable to reduce the power required to run such devices to a level significantly below that of even low-category UEs as currently specified. One way to do this is to design signalling which is more efficient than existing LTE signalling by being targeted at the MTC-device scenario. The LTE RA procedure has the following problems in such a scenario.

The contention-based RA procedure must be used in most cases. This can result in repeated need to transmit on PRACH even though in the case of MTC devices their access requirements may be tolerant to delay and have a meaningfully non-random pattern to them. There can be significant numbers of MTC devices within the coverage of a single cell, but there are only 64 preambles available in a given cell at a given time. Certain events can trigger many of the devices to have UL data to transmit simultaneously, resulting in many RACH collisions and wasted transmissions by UEs on PRACH.

LTE Release 8 comprises a way of preventing UEs from making access attempts or even responding to pages, by barring certain "access classes" (AC)-the mechanism known as Access Class Barring (ACB).

In ACB, all UEs are randomly allocated to one out of ten ACs numbered 0-9, the AC being embedded in the UE's USIM/SIM ((Universal) Subscriber Identity Module)). Additionally, UEs can also be a member of a special high priority class, AC 11-15: AC 12 is reserved for use by security services, AC 13 is for public utilities such as gas and water suppliers, AC14 is for use of emergency services, and AC15 is for use of staff of the network operator. AC10 is used for emergency calls.

The serving network broadcasts mean durations of access control and barring rates (e.g. percentage value) that commonly apply to ACs 0-9. The UE then draws a uniform random number between 0 and 1 when initiating connection establishment, and compares it with the current barring rate to determine whether it is barred or not. When the uniform random number is less than the current barring rate and the type of access attempt is indicated as "allowed", then the access attempt is allowed; otherwise, the access attempt is not allowed. This prevents the RAN from being overloaded by a rush of synchronized random accesses by UEs.

In UMTS, similar mechanisms are available. A UMTS RACH sub-channel is defined as a sub-set of the total set of uplink access slots. Additionally, Access Service Classes (ASC) are defined, and before the physical RACH procedure can begin Layer 1 receives the set of available signatures and the set of available RACH sub-channels for each ASC. As a result, RACH messages associated with a given ASC are sent on the appropriate signature(s) and time slot(s). In addition a persistence value is defined for each ASC, which controls the probability that a PRACH attempt may be initiated by the medium access control, MAC protocol layer and is equivalent to the transmission probability in LTE described in the previous paragraph.

Further details of Access Service Classes in UMTS can be found in the standards documents 3GPP TS 25.214 V11.1.0, "3rd Generation Partnership Project; Technical Specification Group Radio Access Network; Physical layer procedures (FDD) (Release 11)" and 3GPP TS 25.321 V11.0.0, "3rd Generation Partnership Project; Technical Specification Group Radio Access Network; Medium Access Control (MAC) protocol specification (Release 11).

An important difference between the ASC mechanism of UMTS and the ACB mechanism in LTE is that ASC is more dynamic, employing radio-bearer priorities to determine ASC values (ASC enumeration is such that it corresponds to the order of priority: ASC 0 = highest priority, ASC 7 = lowest priority). For each MAC PDU, MAC indicates the ASC associated with the PDU to the physical layer, based on the corresponding logical channel priorities. Therefore in UMTS the ASC varies over time for the given terminal, whereas an AC in LTE is permanently allocated to a UE.

The original intention in LTE was not for ACB to be used under "normal" operating conditions. However, with the proliferation of machine-type communication (MTC) devices, access control was seen as a potential way of preventing core (and RAN) network overload, by barring MTC devices, which are ideally delay-tolerant and will not suffer if their access attempt was delayed. However, ACB is unsuitable for this purpose because MTC devices would be assigned an AC between 0 and 9 like normal UEs, and there is no possibility to distinguish between access by MTC devices and normal UEs.

An additional mechanism for LTE-Advanced (Release 10 and subsequent) has therefore been devised, known as Extended Access Barring (EAB), which allows certain UEs considered more delay-tolerant to have their access restricted by the network while allowing access from other UEs. This is achieved by broadcasting EAB information whenever the network operator finds that there is a need to limit the load on the network. If the network is not broadcasting the EAB information, or if the EAB information that is broadcast by the network does not bar the UE, then the UE is subject to standard ACB. One proposed mechanism for barring UEs does so by combining EAB and ACB, defining a subframe in which a UE is allowed to make an access attempt under EAB on the basis of its AC. Further details regarding both ACB and EAB can be found in 3GPP TS 22.011 v11.2.0, "3rd Generation Partnership Project; Technical Specification Group Services and System Aspects; Service accessibility (Release 11)".

EAB as presently specified is only effective in cases of slowly varying traffic loads. Broadcasting EAB more frequently as part of the above-mentioned SIBs would allow EAB to be more responsive but at the cost of consuming battery power of UEs. Furthermore, EAB only successfully protects from MTC overload in Release 11 networks. MTC devices may still camp on legacy (i.e. Release 8/9/10) networks and in that case the existing ACB is the only way of preventing overload. However, the ACB mechanism is insufficient to deal with the surges of MTC traffic since there is no differentiation between the MTC and non-MTC devices as already mentioned. An extended wait timer, introduced in Release 10, does go some way to protecting the core network from overload, but is only applicable to devices which have already successfully performed the RA procedure; it does not prevent MTC devices from attempting radio access.

Therefore, additional mechanisms are needed to improve the performance of networks having potentially very large numbers of MTC devices.

US2011/0274040A1 discloses a method of controlling access of wireless devices to a wireless communication network, in accordance with the preamble of claim 1. PRACH resources, including preambles, may be divided between different access service classes (ASCs) in order to provide different priorities of RACH usage. In this way, wireless devices may be provided with contention-free resource allocation by being assigned a set of preambles which are signalled or broadcast to the wireless devices. The ASC of a wireless device may be programmed into the device initially and may be updated subsequently by network signalling, and new ASCs may be defined for MTC devices.

### Summary of the Invention

Embodiments of the present invention are based on the principle of dynamic allocation of resources needed for MTC or delay tolerant devices to access a wireless communication network, with the aim of improving their access delay performance.

According to a first aspect of the present invention, there is provided a method for controlling access of wireless devices to a wireless communication network, comprising:
defining an access class with which a wireless device may be associated, the access class having associated with it: i) access class barring information determining under what conditions a wireless device associated with the access class is allowed to access the network; and ii) at least one characteristic of a signal to be transmitted by a wireless device, associated with the access class to access the network;
assigning a wireless device to the access class;
the network notifying said wireless device of the access class barring information associated with its access class;
said wireless device determining whether it is allowed to access the network based on the access class barring information; and
if said wireless device is allowed to access the network, said wireless device transmitting the signal with at least one of said characteristics,
wherein the signal transmitted by said wireless device to access the network is a random access preamble, and the at least one characteristic of the signal includes a set of one or more preambles allocated to the access class, characterised in that: the defining further comprises assigning pre-arranged meanings to specific preambles or subsets of preambles from the set of one or more preambles allocated to the access class, said wireless device transmitting the signal by selecting a preamble from the set of one or more preambles allocated to the access class and signifying additional information to the network by its selection of preamble, said additional information including at least one of:
   an acceptable waiting time before random access is allowed or before the network allocates uplink resources for access to the network;
   a request for said wireless device to change its access class; and
   a notification that said wireless device is changing its access class.

The term "wireless device" covers both "normal" UEs and MTC devices, and also embraces the "terminal" referred to elsewhere in this specification.

The term "network" covers any kind of wireless communication network suitable for defining at least one novel access class in accordance with the present invention, for example a UMTS or LTE-based network.

The "access class" can be broadly understood as a category representing one or more of the following in relation to accessing the network:- capability of a wireless device (terminal), allowed behaviour of a wireless device, membership of a group of wireless devices. As an example, an access class used in this invention may be in addition to those which may be conventionally provided in the wireless communication network.. There may be other wireless devices in the network, for which access to the network is controlled using conventionally-provided access classes.

The use of access classes is described here in terms of assigning a wireless device to an access class. However, this can be considered broadly equivalent to assigning an access class to a wireless device. For clarification, the intention here is that both possibilities are included within the scope of creating an association between a wireless device and an access class.

Assigning a wireless device to an access class may be performed on the basis of some property of the wireless device.

Here, the "some property" of the wireless device includes, for example, whether the device is an MTC or delay-tolerant wireless device. Delay tolerance may be related to QoS requirements such as maximum delay and packet size.

As already mentioned, the signal transmitted by the wireless device to access the network is a random access preamble, and the at least one characteristic of the signal is that the signal is selected from a set of one or more preambles allocated to the access class. As a concrete example, the wireless device is an MTC device. An embodiment of the present invention thus allows a subset of available preambles to be allocated to MTC devices.

The at least one characteristic of the signal to be transmitted may be preset in the wireless device, for example by being stored in firmware of the device at the time of manufacture.

The above-mentioned notifying step may comprise transmitting a signal in which an identity of the wireless device and/or its access class or a sub-class thereof, is embedded. This may further involve scrambling the access class barring information with an identity of the wireless device or of the (sub-)access class of the wireless device.

In one embodiment, the notifying comprises scrambling the access class barring information with the set of one or more preambles, the set of one or more preambles being selected from among a plurality of preambles known to the wireless device.

Methods of the invention are preferably applied to a wireless communication network wherein wireless communication takes place in time units of subframes, in which case the at least one characteristic of the signal to be transmitted may include a specific subframe in which the wireless device is allowed to access the network.

As already mentioned, the present invention employs the principle of partitioning the set of possible preambles in order to allow the further information to be signified by the choice of partition. In this way, when the set of preambles defined in the system is divided into two or more partitions, transmitting a preamble from the wireless device, can indirectly indicate additional information to the network by virtue of the partition to which the preamble belongs. Likewise the signalling of one or more preambles from the network for use by the wireless device can indirectly indicate additional information to the wireless device.

Thus, embodiments may include the network notifying the wireless device of the one or more preambles associated with its access class and, by selecting which preambles to notify to the wireless device, signify additional information to the wireless device regarding its access class. In this case, the additional information signified to the wireless device by the selection of preambles may include any one or more of:
a waiting time before random access is allowed for wireless devices of its access class;
a waiting time before the network will allocate uplink resources for wireless devices of its access class;
an indication of resources available for wireless devices of its access class; and
an indication of contention for access among the wireless devices.

Moreover, when the additional information signified to the network by the wireless device includes the notification that the wireless device is changing its access class, the method may further comprise the network responding to the notification.

It will be understood that a change in the access class of a wireless device may be associated with a change in the "some property of the wireless device" referred to earlier. For example a change in delay tolerance of the wireless device may lead it to request a change of access class.

In one embodiment employing this principle, the additional information signified to the wireless device includes the waiting time before random access is allowed or the waiting time before the network allocates uplink resources; and the additional information signified to the network includes a request for the wireless device to change its access class when the wireless device determines that the waiting time is unacceptable.

According to other aspects of the present invention, there are provided a wireless communication network (wireless communication system), a wireless device, and computer-readable instructions as defined in the claims.

The computer-readable instructions may be stored on one or more computer-readable media.

Thus, embodiments of the present invention provide a closer connection between access class barring (ACB) and random access (RA), in order to facilitate a more dynamic device barring as well as shorter radio access (in cases when the access is allowed), compared to state-of-the-art systems. The invention proposes that ACB carries information on the preambles allocated to a class (or a virtual class). How this information is combined with the ACB and what the information means for the UEs in question is covered by this invention. Additionally, meanings are assigned to RA preambles selected by UEs, in response to changes in the ACB information. The mechanisms devised are particularly relevant to LTE-Advanced systems.

Embedding preamble assignment into the ACB mechanism in the ways proposed in this invention has the following benefits:
1. It shortens the RRC connection establishment procedure;
2. It enables selective barring within a group, based on sub-group identities;
3. It creates a link between group or device identities and RACH preambles;
4. It allows UEs' responses to enhanced barring information to be defined.

The above benefits enable a more efficient core and radio-access network protection from overload caused by MTC devices, while allowing better control of contention among the MTC devices themselves.

In general, and unless there is a clear intention to the contrary, features described with respect to one aspect of the invention may be applied equally and in any combination to any other aspect, even if such a combination is not explicitly mentioned or described herein.

References in this specification to "LTE" also include "LTE-A" except as otherwise demanded by the context.

As is evident from the foregoing, the present invention involves signal transmissions between a base station and at least one wireless device in a wireless communication network (wireless communication system). The "wireless device" referred to here may take any form suitable for transmitting and receiving such signals. For the purpose of visualising the invention, it may be convenient to imagine the wireless device as a mobile handset but no limitation whatsoever is to be implied from this. In preferred embodiments of the present invention the base stations will typically take the form proposed for implementation in the 3GPP LTE and 3GPP LTE-A groups of standards, and may therefore be described as an eNodeB (eNB) (which term also embraces Home eNodeB or HeNB) as appropriate in different situations. However, subject to the functional requirements of the invention, some or all base stations may take any other form suitable for transmitting and receiving signals to and from wireless devices.

### Brief Description of the Drawings

Reference is made, by way of example only, to the accompanying drawings in which:
Figure 1A illustrates a resource block (RB) on the uplink of an LTE wireless communication system;
Figure 1B illustrates frames and subframes in an LTE wireless communication system;
Figure 2A shows a terminal (UE) in wireless communication with a base station (eNodeB);
Figure 2B shows relationships between various uplink channels defined in LTE;
Figure 3 shows a contention-based RACH procedure in LTE;
Figure 4 is a flowchart of operation in one embodiment of the present invention; and
Figure 5 is a schematic block diagram showing functional blocks of a terminal used in embodiments of the present invention.

### Detailed Description

Embodiments of the present invention are based on the principle of dynamic allocation of RACH resources for MTC or delay tolerant devices, with the aim of improving their access delay performance.

Embodiments of this invention can be viewed as an amalgamation of features known from both EAB and ACB mechanisms; however, embodiments of the present invention go beyond this by linking the set of available preambles with an AC, and using barring information to not only indicate the permission to attempt access but also to signal parameters of the access. If one or more AC is created or reserved for MTC devices (or if the device type could be inferred to be MTC from other sources, such as the transmission of the delay-tolerant indicator(s), or UE category/capabilities, or higher-layer signalling, thereby creating a "virtual" MTC "access class"), further enhancements to the access mechanism are possible as explained below.

The main problem with the prior art solutions presented above is that the length of the RACH procedure (and therefore that of the RRC connection establishment procedure) is not significantly shortened. The inventors have realised that if the MTC "identity" of the device is somehow established, it is possible to pre-assign a fraction of the RACH preambles to an MTC "access class" and give these preambles certain pre-arranged meanings (which may change over time) so as to assist MTC devices in determining whether and when to access the network. In this way, failed attempts are reduced with the result that a given MTC device should successfully access the network in a shorter time.

In general, in the following embodiments, it is assumed that an MTC device is somehow associated with (e.g. assigned to) a given AC. This could be fixed (e.g. at manufacture) or by configuration (e.g. RRC signalling). Configuration presupposes that the MTC device has accessed the network at some point in the past, before attempting newly to access the network. The embodiments are aimed at MTC devices, but not restricted to this case.

Therefore, in the embodiments to be described, a (small) number of RACH preambles are pre-assigned to an MTC AC. As in the prior art, there is still contention for RACH resources among the MTC devices, but the impact on legacy UEs is reduced compared to prior art because a large number of preambles is still available for "regular" RACH. The first to fourth embodiments described next achieve this pre-assignment in different ways.

The first embodiment is a (semi) static configuration whereby the MTC devices are configured to only ever use RACH preambles for their contention-based access from a (possibly very) limited set.

The second embodiment provides a more dynamic solution whereby the allocated preambles are broadcast together with ACB information for the given MTC AC (devices not in the AC concerned would normally ignore the ACB information, but see below).

In a third embodiment, in order to avoid restricting all MTC devices to a limited number of RACH preambles, the barring information may be additionally scrambled with the identity of the sub-class of MTC devices for which it is intended (or even a specific device). This is referred to below as a "sub-class ID". The sub-class ID corresponds to a subset of preambles selected from the predefined set (64 in LTE) of available preambles. Thus, only MTC devices which can descramble the ACB information can use the preambles involved. Several sub-classes may be defined with MTC devices assigned to a given sub-class, either randomly or in accordance with some criterion.

In a first variation of the third embodiment, a whole access class is arranged to use the subset of RACH preambles in this way. This allows some preambles to be released for other uses, for example by non-MTC devices, thereby providing a mechanism for controlling collisions among RACH accesses by devices. Thus, the access class barring information is scrambled with a preamble selected from the subset. An MTC device receiving the access class barring information attempts to descramble it by selecting a preamble from the subset for use in the descrambling, and repeating the process until it is successful. The successful preamble will then be used by the MTC device to perform the RACH procedure.

In a second variation of the third embodiment, the access class barring information is scrambled both with a sub-class ID and with one of the preambles in the corresponding subset of preambles (see above). Then, an MTC device attempts to partially descramble the access class barring information using the sub-class ID. If it succeeds, it completes the descrambling by trying each preamble from the subset of preambles, until it is successful. The MTC device then performs RACH by using the successful preamble. In this way, the amount of computation required for a given MTC device to identify the preamble involved, is decreased because only a limited number of preambles is contained in the subset corresponding to the sub-class ID.

A fourth embodiment combines the static and dynamic configurations in the following way: the sub-selection of statically pre-allocated preambles is done by scrambling the ACB information with a combination of the chosen preambles, which the devices then deduce by trying out all the possibilities allocated to the MTC AC. The advantage of this solution is that, unlike the third embodiment, there is no need to employ a distinct device or sub-class ID; that is, the preambles in effect serve as the ID. This method further allows some of the statically pre-allocated preambles to be released for use by non-MTC devices. In one form of this idea, a specific preamble indicates an expected behaviour as explained below with respect to fifth and later embodiments.

The use of the preambles for a given MTC AC could be restricted to particular subframes, with different ACs (not necessarily only MTC ACs) being allocated different subframes. This would balance the potential PRACH load from different ACs.

The above assignment of preambles to MTC devices can be applied to any MTC devices capable of receiving and acting on the ACB information. "Legacy" MTC devices not compliant with the invention can continue to operate in accordance with conventional ACB and (for post Rel-10 devices), EAB.

Further embodiments now to be described permit the network and/or MTC device to exchange additional information, over and above that explicitly contained in the signals being exchanged. This additional information is signalled indirectly by the choice of RA preambles either in the access class barring information from the network, or in the RA preamble transmitted from the MTC device. Such indirect signalling results from partitioning the set of preambles available for RA by MTC devices, and assigning pre-arrange meanings to specific preambles or subsets of preambles. This can allow the RRC connection establishment procedure to be significantly shortened by signifying additional information to the MTC device and/or network at an earlier stage.

Thus, in a fifth embodiment, pre-assigned meanings are given to (some of) the selected MTC AC preambles contained in the access class barring information, in order to reduce the number of failed access attempts, reduce the collision probability between contention-based accesses by different devices, or by warning devices of excessive delays to be expected.

This information could include any one or more of:-
(a) a wait duration before RACH is allowed for MTC devices (unlike the conventional back-off procedure, RACH is here essentially disallowed for the time being by the choice of allocated preambles). This wait duration represents the time period between receipt of a broadcast containing access class barring information, and the permission for a device to send a RACH preamble. It should be noted that there is no wait duration in the first embodiment, since devices (so long as they are not barred from accessing the network to begin with) may transmit a RACH preamble at will.
(b) a wait duration before pre-allocated resources for L2/L3 are available, in other words before the network makes available the uplink resources needed for the device to transmit "Message 3" shown in Fig. 3, for example. Resources for this purpose are scheduled in order to avoid contention at this stage of the procedure, so the network and the device can know when resources will be available. In this way the risk of collision is avoided, and the device can make internal QoS calculations. The starting point for calculation of this wait period could again be the broadcast of the access class barring information.
(c) an estimate of resources available for MTC devices (his could help MTC devices switch to a different network if this one cannot support them). The network knows how many MTC devices are currently camping on it (i.e., connected in a cell for which resources are being scheduled) and knows statistics on past access attempts. It is therefore possible to calculate an estimate of resources available for devices newly joining the network, in the form of an expected delay for example.
(d) an estimate of contention from other MTC devices an MTC device can expect. One way to express this estimate of contention would be as a probability of access being denied.
(e) an indication of resources which will be made available to the MTC device on the downlink, for example a semi-persistent scheduling allocation to be applied after initial access.

Fig. 4 outlines the procedure from the network perspective in this embodiment. Firstly (step 102), at least one MTC access class (AC) is defined. The classes themselves would usually be defined within the system specification rather than during operation. The MTC devices are associated with the new access class. In this way it is possible to set the AC of each MTC device in advance, for example by setting in firmware.

In addition (step 104), the network assigns meanings to at least some of the preambles. Again, this step is preferably conducted in advance of actual operation of the network so that the implicit meanings can be known by every MTC device, for example by storing a look-up table in a memory of the device.

During operation of the network (step 106), or alternatively in advance of actual operation of the network, a set of preambles is reserved for the (or each) MTC class. This would normally be a subset of the 64 preambles already defined in LTE, although it would be possible to define additional preambles within the system specification if desired. The preambles are allocated in such a way that sufficient preambles having meanings assigned in step 104 are reserved for each MTC class.

Then (step 108) the network broadcasts the access class barring information including the set of reserved preambles to all connected devices. Devices not in the AC concerned will normally ignore the access class barring information. Once received by MTC devices in the appropriate class, the set of preambles can be stored within each MTC device for future use.

At some later time during operation, an MTC device wishing to gain access to the network does so by selecting a preamble from the subset of preambles notified to it. Such selection may be made at random, or may be made purposefully as will now be described.

In a sixth embodiment, the preamble selected by the MTC device from the set of preambles available for the MTC AC carries additional information for the network. For example, the available preambles could further be partitioned into subsets indicating the length of an acceptable time delay (that is, how long the MTC device can wait in view of data it is holding) between the transmitted RACH preamble and the L2/L3 message, effectively shortening the RACH procedure. A simpler alternative would be to send to the network, by the choice of a preamble, that the MTC device has data it urgently needs to send.

Thus, in the case of a wireless device previously behaving as a delay-tolerant device, a change in access class might be prompted by a change in this behaviour, or in other words a change in "a property of the wireless device" as referred to in the claims.

The preamble could additionally indicate a request for an AC change (by selecting some default preamble, which could be the same for any MTC AC, or for all ACs).

In a seventh embodiment, it is assumed that this request is in fact a notification and that, without the need for the network to confirm it, the device is now in a different access class and will apply the rules of this class with regards to further access barring, allocated preambles and so forth. The change of AC could be from one MTC AC to another, or possibly from an MTC AC to a general AC for UEs (although it would not be desirable for large numbers of MTC devices to have the same access rights as normal UEs).

For this embodiment to function, each MTC devices would need some knowledge of the possible access classes. In some cases it may be possible for MTC devices not in a given access classes, to receive and decode the ACB for that AC. Storing such ACB information would assist such MTC devices in changing their AC as outlined above.

One manner of changing the AC, assuming that the or each MTC AC is numbered like the normal ACs in LTE, would be for the MTC device to move to the AC which has the next numerical value on the list. This would avoid the need for the MTC device to identify the new AC explicitly by its choice of preamble.

Alternatively there may be only two ACs available to MTC devices, for example a normal-priority class and a higher-(or lower-)priority class. In this case a single preamble would be sufficient to communicate the change of access class.

In a further variation of this embodiment, the network confirms the new AC.

The location in frequency and time of the response from the network, for example the RAR labelled (2) in Figure 3 (among a subset that the device is configured to monitor for this purpose) could confirm the new AC or indicate a different one.

An eighth embodiment is essentially a combination of the fifth and sixth embodiments. The network transmits to the MTC device at least one dynamically pre-assigned preamble (transmitted as part of the now enhanced ACB information) for its use in contention-based RA. The network's choice of preamble(s) indicates to the MTC device a certain wait duration, which as above is a time period which must elapse before the MTC device is permitted to send a RA preamble message. The MTC device may consider this wait period to be unacceptable, perhaps due to the amount or urgency of data it needs to transmit.

Normally, a preamble outside the set allocated in the access class barring information, or transmitted before elapse of the wait period, would be disregarded by the network. However if the AC allows, the device could then RACH with another preamble, chosen from a sub-set of pre-allocated preambles, indicating a request for AC change.

In a ninth embodiment, if the MTC device has high priority data and if its AC allows, it could use the normal PRACH procedure, in other words the MTC device would be permitted to send a RA preamble without a wait period, and/or with a free choice of preambles available to normal UEs. In a variation of this embodiment, the access to the normal PRACH procedure for an AC is restricted to particular subframes, with different ACs being allocated different subframes. This would balance the potential (normal) PRACH load from different ACs.

Although the proposed scheme is intended primarily for MTC in LTE, it is not limited to such applications. The above embodiments may also be applied to non-MTC devices (normal UEs) particularly if these are delay-tolerant for any reason.

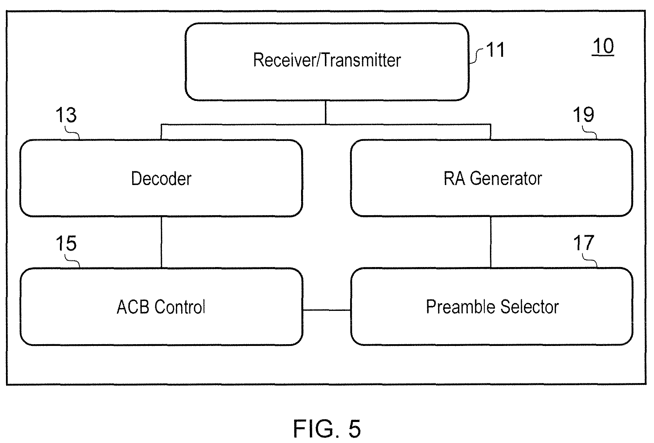

Figure 5 shows functional blocks of a wireless device suitable for use as terminal in embodiments of the present invention. The wireless device 10 corresponds to the UE 10 shown in Figure 2A. It may be (but need not be) an MTC device. The wireless device has a receiver/transmitter 11 for receiving signals from, and transmitting signals to, the network. It is assumed that the wireless device joins the network at some earlier time, and receives access class barring information in accordance with the third embodiment, for example. The scrambled access class barring information is routed to a decoder 13 to be decoded on the basis of an identity (which may be the device's own identity or that of an MTC AC). The decoded access class barring information is forwarded to an ACB control unit which recognises the conditions under which the wireless device is permitted to perform RA, including the set of preambles permitted to the device/AC.

At some later time, typically when the device has entered the RRC_Idle state, the wireless device may have some data to send and therefore decides that it needs to access the network. Then a preamble selector 17 selects one of the available preambles, and this is used to generate an RA message in RA Generator 19. The RA message, which corresponds to message (1) in Figure 3, is passed to the Receiver/Transmitter 11 to be sent to the network.

To summarise, embodiments of the present invention provide a closer connection between access class barring (ACB) and random access (RA), in order to facilitate a more dynamic device barring as well as shorter radio access (in cases when the access is allowed), compared to state-of-the-art systems. The invention proposes that ACB carries information on the preambles allocated to a class (or a virtual class). How this information is combined with the ACB and what the information means for the UEs in question is covered by this invention. Additionally, meanings are assigned to RA preambles selected by UEs, in response to changes in the ACB information. The mechanisms devised are particularly relevant to LTE-Advanced systems.

Key features in embodiments of the present invention include the following:
- An access class (AC) is determined according to the type of UE, or is specifically associated with the UE;
- For this AC, the RACH procedure is modified, this modification comprising varying the allocated preambles;
- It also comprises varying the meaning of the preambles;
- It further comprises defining how the preambles are sent, using ACB mechanism.

Although the invention was referred to above as an amalgamation of EAB and ACB mechanisms, it should be noted that embodiments of the present invention do not require either EAB or ACB but could in principle be applied to any access barring mechanism. On the other hand, it is preferred to implement the invention by change in the system specification. Legacy MTC devices would not support the mechanism described above and therefore would not participate in the modified RACH procedure.

Resources in a wireless communication system such as UMTS or LTE are generally scheduled in each cell by a base station (NodeB or eNB) controlling that cell. Thus, references to "the network" generally imply actions performed at the base station level; however at least some of the steps taken by "the network" could be initiated, managed or performed at a higher level in the network.

It is to be understood that various changes and/or modifications may be made to the particular embodiments just described without departing from the scope of the claims.

Although described with respect to MTC devices, embodiments of the present invention are not confined to use with MTC devices or fault-tolerant devices in general. Any criterion, including random selection, may be used to assign wireless devices to an access class of the kind proposed in the present invention.

The invention has been described with reference to LTE FDD, but could also be applied for LTE TDD, and to other 3GPP wireless communication system such as UMTS, and additionally to other wireless communication systems including WiMAX (IEEE 802.16) so long as "access classes" (or equivalent) are capable of being defined.

Although primarily applied to the uplink of a wireless communication system, embodiments of the present invention may be relevant also for the downlink, for example by allowing the network to indicate an allocation of resources on the downlink as in item (e) of the above mentioned fifth embodiment.

The invention does not require any expansion of the number of preambles beyond the 64 currently defined in LTE for example. However, the invention would be equally applicable to future systems designed with an expanded number of preambles whilst following a similar contention-based RACH procedure.

The partitionings discussed can be defined in either or both of relevant specifications and the System Information Blocks (already defined in LTE) with suitable expansion. If included in the specifications, all UEs for which that Release of the specification applies would automatically be aware of the partitions. If included in the SIBs, UEs would only be aware of the partitions if the relevant SIBs are transmitted and contain the partitioning information, and the UE is able to recognize such signalling.

Although various references have been made above to actions performed at an eNodeB, at least some such actions may actually be controlled at a higher level in the network and notified to the eNodeB.

In any of the aspects or embodiments of the invention described above, the various features may be implemented in hardware, or as software modules running on one or more processors. Features of one embodiment may be applied to any of the other embodiments.

The invention also provides a computer program or a computer program product for carrying out any of the methods described herein, and a computer readable medium having stored thereon a program for carrying out any of the methods described herein.

A computer program embodying the invention may be stored on a computer-readable medium, or it may, for example, be in the form of a signal such as a downloadable data signal provided from an Internet website, or it may be in any other form.

### Industrial Applicability

Embedding preamble assignment into the ACB mechanism in the ways proposed in this invention has the following benefits:
1. It shortens the RRC connection establishment procedure;
2. It enables selective barring within a group, based on sub-group identities;
3. It creates a link between group or device identities and RACH preambles;
4. It allows UEs' responses to enhanced barring information to be defined.

The above enables a more efficient core and radio-access network protection from overload caused by MTC devices, while allowing better control of contention among the MTC devices themselves.

## Claims

1. A method for controlling access of wireless devices (10) to a wireless communication network, comprising:
defining an access class with which a wireless device (10) may be associated, the access class having associated with it: i) access class barring information determining under what conditions a wireless device associated with the access class is allowed to access the network; and ii) at least one characteristic of a signal to be transmitted by a wireless device, associated with the access class to access the network;
assigning a wireless device (10) to the access class;
the network notifying said wireless device (10) of the access class barring information associated with its access class;
said wireless device (10) determining whether it is allowed to access the network based on the access class barring information; and
if said wireless device (10) is allowed to access the network, said wireless device transmitting the signal with at least one of said characteristics,
wherein the signal transmitted by said wireless device (10) to access the network is a random access preamble, and the at least one characteristic of the signal includes a set of one or more preambles allocated to the access class, **characterised in that**:
the defining further comprises assigning pre-arranged meanings to specific preambles or subsets of preambles from the set of one or more preambles allocated to the access class, said wireless device transmitting the signal by selecting a preamble from the set of one or more preambles allocated to the access class and signifying additional information to the network by its selection of preamble, said additional information including at least one of:
an acceptable waiting time before random access is allowed or before the network allocates uplink resources for access to the network;
a request for said wireless device to change its access class; and
a notification that said wireless device is changing its access class.

2. The method according to claim 1 wherein the at least one characteristic of the signal to be transmitted is preset in said wireless device (10).

3. The method according to claim 1 wherein the notifying comprises transmitting a signal in which an identity of said wireless device (10) and/or its access class is embedded.

4. The method according to claim 3 wherein the notifying comprises scrambling the access class barring information with an identity of said wireless device (10) or of the access class of said wireless device.

5. The method according to claim 3 wherein the notifying comprises scrambling the access class barring information with the set of one or more preambles, the set of one or more preambles being selected from among a plurality of preambles known to said wireless device (10).

6. The method according to any preceding claim wherein wireless communication in the network takes place in time units of subframes, said at least one characteristic of the signal to be transmitted including a specific subframe in which said wireless device (10) is allowed to access the network.

7. The method according to claim 1 further comprising the network notifying said wireless device (10) of one or more preambles associated with its access class and, by selecting which preambles to notify to said wireless device, signifying additional information to said wireless device regarding its access class.

8. The method according to claim 7 wherein the additional information signified to said wireless device (10) by the selection of preambles includes one or more of:
a waiting time before random access is allowed for wireless devices of its access class;
a waiting time before the network will allocate uplink resources for wireless devices of its access class;
an indication of resources available for wireless devices of its access class; and
an indication of contention for access among the wireless devices.

9. The method according to claim 1 wherein, when said additional information includes the notification that said wireless device (10) is changing its access class, the method further comprises the network responding to the notification.

10. The method according to claim 7, wherein:
the additional information signified to said wireless device (10) includes the waiting time before random access is allowed or the waiting time before the network allocates uplink resources; and
the additional information signified to the network includes a request for said wireless device (10) to change its access class when said wireless device determines that the waiting time is unacceptable.

11. A wireless communication network comprising a plurality of wireless devices (10), wherein an access class is defined to which a wireless device may be assigned, the access class having associated with it access class barring information determining under what conditions a wireless device associated with the access class is allowed to access the network and at least one characteristic of a signal transmitted by a wireless device to access the network; wherein:
the network is arranged to notify a wireless device (10) associated with the access class of the access class barring information;
the wireless device (10) is arranged to determine whether it is allowed to access the network based on the access class barring information; and
the wireless device (10), in response to a determination that it is allowed to access the network, is arranged to transmit the signal with at least one of said characteristics,
wherein the signal transmitted by said wireless device (10) to access the network is a random access preamble, and the at least one characteristic of the signal includes a set of one or more preambles allocated to the access class, **characterised in that**:
defining the access class comprises assigning pre-arranged meanings to specific preambles or subsets of preambles from the set of one or more preambles allocated to the access class, said wireless device (10) transmitting the signal by selecting a preamble from the set of one or more preambles allocated to the access class and signifying additional information to the network by its selection of preamble, said additional information including at least one of:
an acceptable waiting time before random access is allowed or before the network allocates uplink resources for access to the network;
a request for said wireless device (10) to change its access class; and
a notification that said wireless device (10) is changing its access class.

12. A wireless device (10) for use in a method according to any of claims 1 to 10 and configured to determine whether it is allowed to access the network based on the access class barring information for the access class with which it is associated; and if said wireless device is allowed to access the network, to transmit the signal using at least one of said characteristics, **characterised in that**:
said wireless device (10) is further configured to transmit the signal by selecting a preamble from the set of one or more preambles allocated to the access class and to signify additional information to the network by its selection of preamble, pre-arranged meanings being assigned to specific preambles or subsets of preambles from the set of one or more preambles allocated to the access class, said additional information including at least one of:
an acceptable waiting time before random access is allowed or before the network allocates uplink resources for access to the network;
a request for said wireless device (10) to change its access class; and
a notification that said wireless device (10) is changing its access class.

13. Computer-readable instructions which, when executed by a processor of a wireless device in a wireless communication network, configure the wireless device to determine whether it is allowed to access the network based on the access class barring information for the access class with which it is associated; and if said wireless device is allowed to access the network, to transmit the signal using at least one of said characteristics;
**characterised in that** the computer-readable instructions further configure the wireless device (10) to transmit the signal by selecting a preamble from the set of one or more preambles allocated to the access class and to signify additional information to the network by its selection of preamble, pre-arranged meanings being assigned to specific preambles or subsets of preambles from the set of one or more preambles allocated to the access class, said additional information including at least one of:
an acceptable waiting time before random access is allowed or before the network allocates uplink resources for access to the network;
a request for said wireless device (10) to change its access class; and
a notification that said wireless device (10) is changing its access class.

## Patentansprüche

1. Ein Verfahren zum Steuern eines Zugriffs von drahtlosen Vorrichtungen (10) auf ein Drahtloskommunikationsnetzwerk, umfassend:
Bestimmen einer Zugriffsklasse, mit welcher eine drahtlose Vorrichtung (10) verknüpft werden kann, wobei die Zugriffsklasse verknüpft ist mit: i) Zugriffsklassensperrinformation, welche bestimmt, unter welchen Bedingungen eine mit der Zugriffsklasse verknüpfte drahtlose Vorrichtung zum Zugriff auf das Netzwerk zugelassen ist; und ii) zumindest einer Eigenschaft eines durch eine mit der Zugriffsklasse verknüpften drahtlosen Vorrichtung zu übertragenden Signals zum Zugriff auf das Netzwerk;
Zuordnen einer drahtlosen Vorrichtung (10) zu der Zugriffsklasse;
wobei das Netzwerk der drahtlosen Vorrichtung (10) die mit ihrer Zugriffsklasseverknüpfte Zugriffsklassensperrinformation mitteilt;
wobei die drahtlose Vorrichtung (10) bestimmt, ob Zugreifen auf das Netzwerk zugelassen ist, basierend auf der Zugriffsklassensperrinformation; und,
falls die drahtlose Vorrichtung (10) zum Zugriff auf das Netzwerk zugelassen ist, die drahtlose Vorrichtung das Signal mit zumindest einer der Eigenschaften überträgt,
wobei das durch die drahtlose Vorrichtung (10) zum Zugreifen auf das Netzwerk übertragene Signal eine Zufallszugriff-Präambel ist und die zumindest eine Eigenschaft des Signals einen Satz von einer oder mehreren Präambeln umfasst, zugeordnet zu der Zugriffsklasse, **dadurch gekennzeichnet, dass**:
das Bestimmen weiter ein Zuordnen von vorher bestimmten Bedeutungen zu bestimmten Präambeln oder Teilsätzen von Präambeln aus dem Satz von einer oder mehreren Präambeln, zugeordnet zu der Zugriffsklasse, umfasst, wobei die drahtlose Vorrichtung das Signal durch Auswählen einer Präambel aus dem Satz von einer oder mehreren Präambeln, zugeordnet zu der Zugriffsklasse, überträgt und zusätzliche Informationen zu dem Netzwerk durch dessen Auswahl einer Präambel bezeichnet, wobei zusätzliche Informationen zumindest eine der folgenden umfassen:
eine akzeptable Wartezeit, bevor ein Zufallszugriff zugelassen wird oder bevor das Netzwerk Uplink-Ressourcen für einen Zugriff auf das Netzwerk zuteilt;
eine Anfrage für die drahtlose Vorrichtung zum Ändern von deren Zugriffsklasse; und
eine Benachrichtigung, dass die drahtlose Vorrichtung deren Zugriffsklasse ändert.

2. Verfahren gemäß Anspruch 1, wobei die zumindest eine Eigenschaft des zu übertragenden Signals in der drahtlosen Vorrichtung (10) voreingestellt ist.

3. Verfahren gemäß Anspruch 1, wobei das Benachrichtigen ein Übertragen eines Signals umfasst, wobei eine Identität der drahtlosen Vorrichtung (10) und/oder deren Zugriffsklasse eingebettet ist.

4. Verfahren gemäß Anspruch 3, wobei das Benachrichtigen ein Verschlüsseln der Zugriffsklassensperrinformation mit einer Identität der drahtlosen Vorrichtung (10) oder der Zugriffsklasse der drahtlosen Vorrichtung umfasst.

5. Verfahren gemäß Anspruch 3, wobei das Benachrichtigen ein Verschlüsseln der Zugriffsklassensperrinformation mit dem Satz von einer oder mehreren Präambeln, dem Satz von einer oder mehreren Präambeln, welche aus einer Vielzahl von der drahtlosen Vorrichtung (10) bekannten Präambeln ausgewählt wird, umfasst.

6. Verfahren gemäß einem der vorstehenden Ansprüche, wobei eine Drahtloskommunikation in dem Netzwerk in Zeiteinheiten von Subframes stattfindet, wobei die zumindest eine Eigenschaft des zu übertragenden Signals einen bestimmten Subframe umfasst, bei welchem die drahtlose Vorrichtung (10) zum Zugreifen auf das Netzwerk zugelassen ist.

7. Verfahren gemäß Anspruch 1, weiter umfassend, dass das Netzwerk die drahtlose Vorrichtung (10) über eine oder mehrere Präambeln, verknüpft mit deren Zugriffsklasse, benachrichtigt und, durch Auswählen, welche Präambeln die drahtlose Vorrichtung benachrichtigen, zusätzliche Informationen zu der drahtlosen Vorrichtung betreffend deren Zugriffsklasse angegeben werden.

8. Verfahren gemäß Anspruch 7, wobei die zusätzlichen Informationen, welche der drahtlosen Vorrichtung (10) durch das Auswählen von Präambeln angegeben werden, eine oder mehrere der folgenden umfasst:
eine Wartezeit, bevor ein Zufallszugriff für drahtlose Vorrichtungen von deren Zugriffsklasse zugelassen wird;
eine Wartezeit, bevor das Netzwerk Uplink-Ressourcen für drahtlose Vorrichtungen deren Zugriffsklasse zuteilen wird;
eine Angabe von Ressourcen, verfügbar für drahtlose Vorrichtungen der Zugriffsklasse; und
eine Angabe eines Wettbewerbs für einen Zugriff zwischen den drahtlosen Vorrichtungen.

9. Verfahren gemäß Anspruch 1, wobei, wenn die zusätzlichen Informationen die Benachrichtigung umfassen, dass die drahtlose Vorrichtung (10) deren Zugriffsklasse ändert, das Verfahren weiter umfasst, dass das Netzwerk auf die Benachrichtigung antwortet.

10. Verfahren gemäß Anspruch 7, wobei:
der drahtlosen Vorrichtung (10) gemeldete zusätzliche Informationen die Wartezeit, bevor ein Zufallszugriff zugelassen wird, oder die Wartezeit, bevor das Netzwerk Uplink-Ressourcen zuteilt, umfassen; und
die an das Netzwerk gemeldeten zusätzlichen Informationen eine Anfrage für die drahtlose Vorrichtung (10) umfassen, um deren Zugriffsklasse zu ändern, wenn die drahtlose Vorrichtung bestimmt, dass die Wartezeit nicht akzeptabel ist.

11. Ein Drahtloskommunikationsnetzwerk, umfassend eine Vielzahl von drahtlosen Vorrichtungen (10), wobei eine Zugriffsklasse bestimmt ist, zu welcher eine drahtlose Vorrichtung zugeordnet werden kann, wobei die Zugriffsklasse damit verknüpft hat eine Zugriffsklassensperrinformation, welche bestimmt, unter welchen Bedingungen eine drahtlose Vorrichtung, verknüpft mit der Zugriffsklasse, zugelassen ist, auf das Netzwerk zuzugreifen, und zumindest eine Eigenschaft eines durch eine drahtlose Vorrichtung übertragenen Signals zum Zugreifen auf das Netzwerk; wobei:
das Netzwerk angeordnet ist zum Benachrichtigen einer mit der Zugriffsklasse der Zugriffsklassensperrinformation verknüpften drahtlosen Vorrichtung (10);
die drahtlose Vorrichtung (10) zum Bestimmen angeordnet ist, ob diese zum Zugriff auf das Netzwerk zugelassen ist, basierend auf der Zugriffsklassensperrinformation; und
die drahtlose Vorrichtung (10), in Reaktion auf eine Bestimmung, dass es zugelassen ist, auf das Netzwerk zuzugreifen, angeordnet ist, das Signal mit zumindest einer der Eigenschaften zu übertragen,
wobei das durch die drahtlose Vorrichtung (10) zum Zugreifen auf das Netzwerk übertragene Signal eine Zufallszugriff-Präambel ist, und die zumindest eine Eigenschaft des Signals einen Satz von einer oder mehreren Präambeln, zugeordnet zu der Zugriffsklasse, umfasst, **dadurch gekennzeichnet, dass**:
Bestimmen der Zugriffsklasse ein Zuordnen von vorher bestimmten Bedeutungen zu bestimmten Präambeln oder Teilsätzen von Präambeln aus dem Satz von einer oder mehreren Präambeln, zugeordnet zu der Zugriffsklasse, umfasst, wobei die drahtlose Vorrichtung (10), welche das Signal durch Auswählen einer Präambel aus dem Satz von einer oder mehreren Präambeln, zugeordnet zu der Zugriffsklasse, überträgt und zusätzliche Informationen an das Netzwerk durch deren Auswahl einer Präambel angibt, wobei zusätzliche Informationen zumindest eine der folgenden umfassen:
eine akzeptable Wartezeit, bevor ein Zufall-Zugriff zugelassen ist, oder bevor das Netzwerk Uplink-Ressourcen für einen Zugriff auf das Netzwerk zuteilt;
eine Anfrage für die drahtlose Vorrichtung (10) deren Zugriffsklasse zu ändern; und
eine Benachrichtigung, dass die drahtlose Vorrichtung (10) deren Zugriffsklasse ändert.

12. Eine drahtlose Vorrichtung (10) zur Verwendung in einem Verfahren entsprechend einem der Ansprüche 1 bis 10 und ausgebildet zum Bestimmen, ob es zugelassen ist auf das Netzwerk zuzugreifen, basierend auf der Zugriffsklassensperrinformation, für die Zugriffsklasse, mit welcher diese verknüpft ist; und, falls die drahtlose Vorrichtung zum Zugreifen auf das Netzwerk zugelassen ist, zum Übertragen des Signals unter Verwendung von zumindest einer der Eigenschaften, **dadurch gekennzeichnet, dass**:
die drahtlose Vorrichtung (10) weiter ausgebildet ist zum Übertragen des Signals durch Auswählen einer Präambel aus dem Satz von einer oder mehreren Präambeln, zugeordnet zu der Zugriffsklasse, und zum Angeben von zusätzlichen Informationen an das Netzwerk durch dessen Auswahl einer Präambel, wobei vorher bestimmte Bedeutungen zu bestimmten Präambeln oder Teilsätzen von Präambeln aus dem Satz von einer oder mehreren Präambeln, zugeordnet zu der Zugriffsklasse, zugeordnet sind, wobei zusätzliche Informationen zumindest eine der folgenden umfassend:
eine akzeptable Wartezeit, bevor ein Zufallszugriff zugelassen wird, oder bevor das Netzwerk Uplink-Ressourcen für einen Zugriff auf das Netzwerk zuordnet;
eine Anfrage für die drahtlose Vorrichtung (10) deren Zugriffsklasse zu ändern; und
eine Benachrichtigung, dass die drahtlose Vorrichtung (10) deren Zugriffsklasse ändert.

13. Computerlesbare Anweisungen, welche, wenn ausgeführt durch einen Prozessor einer drahtlosen Vorrichtung in einem Drahtloskommunikationsnetzwerk, die drahtlose Vorrichtung zum Bestimmen konfigurieren, ob ein Zugreifen auf das Netzwerk zugelassen ist, basierend auf der Zugriffsklassensperrinformation, für die Zugriffsklasse, mit welcher diese verknüpft ist; und, falls die drahtlose Vorrichtung zum Zugreifen auf das Netzwerk zugelassen ist, zum Übertragen des Signals unter Verwendung von zumindest einer der Eigenschaften;
**dadurch gekennzeichnet, dass** die computerlesbaren Anweisungen weiter die drahtlose Vorrichtung (10) konfigurieren zum Übertragen des Signals durch Auswählen einer Präambel aus dem Satz von einer oder mehreren Präambeln, zugeordnet zu der Zugriffsklasse, und zum Angeben von zusätzlichen Informationen an das Netzwerk durch dessen Auswahl einer Präambel, wobei vorher bestimmte Bedeutungen zu bestimmten Präambeln oder Teilsätzen von Präambeln aus dem Satz von einer oder mehreren Präambeln, zugeordnet zu der Zugriffsklasse, zugeordnet sind, wobei zusätzliche Informationen zumindest eine der folgenden umfassen:
eine akzeptable Wartezeit, bevor ein Zufall-Zugriff zugelassen wird, oder bevor das Netzwerk Uplink-Ressourcen für einen Zugriff auf das Netzwerk zuteilt;
eine Anfrage für die drahtlose Vorrichtung (10) deren Zugriffsklasse zu ändern; und
eine Benachrichtigung, dass die drahtlose Vorrichtung (10) deren Zugriffsklasse ändert.

## Revendications

1. Procédé pour contrôler l'accès de dispositifs sans fil (10) à un réseau de communication sans fil, comprenant :
la définition d'une classe d'accès à laquelle un dispositif sans fil (10) peut être associé, la classe d'accès ayant associé à celle-ci : i) des informations d'interdiction de classe d'accès déterminant dans quelles conditions un dispositif sans fil associé à la classe d'accès est autorisé à accéder au réseau ; et ii) au moins une caractéristique d'un signal devant être transmis par un dispositif sans fil, associé à la classe d'accès pour accéder au réseau ;
l'assignation d'un dispositif sans fil (10) à la classe d'accès ;
le réseau notifiant audit dispositif sans fil (10) les informations d'interdiction de classe d'accès associées à sa classe d'accès ;
ledit dispositif sans fil (10) déterminant s'il est autorisé à accéder au réseau sur la base des informations d'interdiction de classe d'accès ; et
si ledit dispositif sans fil (10) est autorisé à accéder au réseau, ledit dispositif sans fil transmettant le signal avec au moins une desdites caractéristiques,
dans lequel le signal transmis par ledit dispositif sans fil (10) pour accéder au réseau est un préambule d'accès aléatoire, et la au moins une caractéristique du signal inclut un ensemble d'un ou plusieurs préambules alloués à la classe d'accès, **caractérisé en ce que** :
la définition comprend en outre l'assignation de significations pré-agencées à des préambules spécifiques ou sous-ensembles de préambules de l'ensemble d'un ou plusieurs préambules alloués à la classe d'accès, ledit dispositif sans fil transmettant le signal en sélectionnant un préambule parmi l'ensemble d'un ou plusieurs préambules alloués à la classe d'accès et signifiant des informations additionnelles au réseau par sa sélection de préambule, lesdites informations additionnelles incluant au moins un parmi :
un temps d'attente acceptable avant que l'accès aléatoire ne soit autorisé ou avant que le réseau n'alloue des ressources de liaison montante pour l'accès au réseau ;
une demande pour que ledit dispositif sans fil change sa classe d'accès ; et
une notification selon laquelle ledit dispositif sans fil change sa classe d'accès.

2. Procédé selon la revendication 1, dans lequel la au moins une caractéristique du signal à transmettre est préétablie dans ledit dispositif sans fil (10).

3. Procédé selon la revendication 1, dans lequel la notification comprend la transmission d'un signal dans lequel une identité dudit dispositif sans fil (10) et/ou sa classe d'accès est intégrée.

4. Procédé selon la revendication 3, dans lequel la notification comprend l'embrouillage des informations d'interdiction de classe d'accès avec une identité dudit dispositif sans fil (10) ou de la classe d'accès dudit dispositif sans fil.

5. Procédé selon la revendication 3, dans lequel la notification comprend l'embrouillage des informations d'interdiction de classe d'accès avec l'ensemble d'un ou plusieurs préambules, l'ensemble d'un ou plusieurs préambules étant sélectionné parmi une pluralité de préambules connus dudit dispositif sans fil (10).

6. Procédé selon l'une quelconque des revendications précédentes, dans lequel la communication sans fil dans le réseau se fait dans des unités de temps de sous-trames, ladite au moins une caractéristique du signal à transmettre incluant une sous-trame spécifique dans laquelle ledit dispositif sans fil (10) est autorisé à accéder au réseau.

7. Procédé selon la revendication 1, comprenant en outre le réseau notifiant audit dispositif sans fil (10) un ou plusieurs préambules associés à sa classe d'accès et, en sélectionnant quels préambules notifier audit dispositif sans fil, signifiant des informations additionnelles audit dispositif sans fil concernant sa classe d'accès.

8. Procédé selon la revendication 7, dans lequel les informations additionnelles signifiées audit dispositif sans fil (10) par la sélection de préambules incluent un ou plusieurs parmi :
un temps d'attente avant que l'accès aléatoire ne soit autorisé pour des dispositifs sans fil de sa classe d'accès ;
un temps d'attente avant que le réseau n'alloue des ressources de liaison montante pour des dispositifs sans fil de sa classe d'accès ;
une indication de ressources disponibles pour des dispositifs sans fil de sa classe d'accès ; et
une indication de contention pour l'accès parmi les dispositifs sans fil.

9. Procédé selon la revendication 1, dans lequel, lorsque lesdites informations additionnelles incluent la notification selon laquelle ledit dispositif sans fil (10) change sa classe d'accès, le procédé comprend en outre le réseau répondant à la notification.

10. Procédé selon la revendication 7, dans lequel :
les informations additionnelles signifiées audit dispositif sans fil (10) incluent le temps d'attente avant que l'accès aléatoire ne soit autorisé ou le temps d'attente avant que le réseau n'alloue des ressources de liaison montante ; et
les informations additionnelles signifiées au réseau incluent une demande pour que ledit dispositif sans fil (10) change sa classe d'accès lorsque ledit dispositif sans fil détermine que le temps d'attente est inacceptable.

11. Réseau de communication sans fil comprenant une pluralité de dispositifs sans fil (10), dans lequel une classe d'accès est définie à laquelle un dispositif sans fil peut être assigné, la classe d'accès ayant associé à celle-ci des informations d'interdiction de classe d'accès déterminant dans quelles conditions un dispositif sans fil associé à la classe d'accès classe est autorisé à accéder au réseau et au moins une caractéristique d'un signal transmis par un dispositif sans fil pour accéder au réseau ; dans lequel :
le réseau est agencé pour notifier à un dispositif sans fil (10) associé à la classe d'accès les informations d'interdiction de classe d'accès ;
le dispositif sans fil (10) est agencé pour déterminer s'il est autorisé à accéder au réseau sur la base des informations d'interdiction de classe d'accès ; et
le dispositif sans fil (10), en réponse à une détermination selon laquelle il est autorisé à accéder au réseau, est agencé pour transmettre le signal avec au moins une desdites caractéristiques,
dans lequel le signal transmis par ledit dispositif sans fil (10) pour accéder au réseau est un préambule d'accès aléatoire, et la au moins une caractéristique du signal inclut un ensemble d'un ou plusieurs préambules alloués à la classe d'accès, **caractérisé en ce que** :
la définition de la classe d'accès comprend l'assignation de significations pré-agencées à des préambules spécifiques ou sous-ensembles de préambules de l'ensemble d'un ou plusieurs préambules alloués à la classe d'accès, ledit dispositif sans fil (10) transmettant le signal en sélectionnant un préambule parmi l'ensemble d'un ou plusieurs préambules alloués à la classe d'accès et signifiant des informations additionnelles au réseau par sa sélection de préambule, lesdites informations additionnelles incluant au moins un parmi :
un temps d'attente acceptable avant que l'accès aléatoire ne soit autorisé ou avant que le réseau n'alloue des ressources de liaison montante pour l'accès au réseau ;
une demande pour que ledit dispositif sans fil (10) change sa classe d'accès ; et
une notification selon laquelle ledit dispositif sans fil (10) change sa classe d'accès.

12. Dispositif sans fil (10) destiné à être utilisé dans un procédé selon l'une quelconque des revendications 1 à 10 et configuré pour déterminer s'il est autorisé à accéder au réseau sur la base des informations d'interdiction de classe d'accès pour la classe d'accès à laquelle il est associé ; et si ledit dispositif sans fil est autorisé à accéder au réseau, pour transmettre le signal en utilisant au moins une desdites caractéristiques, **caractérisé en ce que** :
ledit dispositif sans fil (10) est en outre configuré pour transmettre le signal en sélectionnant un préambule parmi l'ensemble d'un ou plusieurs préambules alloués à la classe d'accès et pour signifier des informations additionnelles au réseau par sa sélection de préambule, des significations pré-agencées étant assignées à des préambules spécifiques ou sous-ensembles de préambules de l'ensemble d'un ou plusieurs préambules alloués à la classe d'accès, lesdites informations additionnelles incluant au moins un parmi :
un temps d'attente acceptable avant que l'accès aléatoire ne soit autorisé ou avant que le réseau n'alloue des ressources de liaison montante pour l'accès au réseau ;
une demande pour que ledit dispositif sans fil (10) change sa classe d'accès ; et
une notification selon laquelle ledit dispositif sans fil (10) change sa classe d'accès.

13. Instructions lisibles par ordinateur qui, lorsqu'elles sont exécutées par un processeur d'un dispositif sans fil dans un réseau de communication sans fil, configurent le dispositif sans fil pour déterminer s'il est autorisé à accéder au réseau sur la base des informations d'interdiction de classe d'accès pour la classe d'accès à laquelle il est associé ; et si ledit dispositif sans fil est autorisé à accéder au réseau, pour transmettre le signal en utilisant au moins une desdites caractéristiques ;
**caractérisé en ce que** les instructions lisibles par ordinateur configurent en outre le dispositif sans fil (10) pour transmettre le signal en sélectionnant un préambule parmi l'ensemble d'un ou plusieurs préambules alloués à la classe d'accès et pour signifier des informations additionnelles au réseau par sa sélection de préambule, des significations pré-agencées étant assignées à des préambules spécifiques ou sous-ensembles de préambules de l'ensemble d'un ou plusieurs préambules alloués à la classe d'accès, lesdites informations additionnelles incluant au moins un parmi :
un temps d'attente acceptable avant que l'accès aléatoire ne soit autorisé ou avant que le réseau n'alloue des ressources de liaison montante pour l'accès au réseau ;
une demande pour que ledit dispositif sans fil (10) change sa classe d'accès ; et
une notification selon laquelle ledit dispositif sans fil (10) change sa classe d'accès.
